# EUROPEAN PATENT APPLICATION

(11) **EP 3 495 862 A1**
(43) Date of publication of application: **12.06.2019**
(21) Application number: 16911598.7
(22) Date of filing: 02.08.2016
(51) Int. Cl.: G02B 6/36

(54) **OPTICAL CONNECTOR PLUG**

(71) Applicant: Sumitomo Electric Industries, Ltd., Osaka-shi, Osaka 541-0041 (JP); Japan Communication Accessories Manufacturing Co., Ltd., Komaki-shi, Aichi 485-0831 (JP)
(72) Inventor: NISHIOKA, Daizo, Yokohama-shi, Kanagawa 244-8588 (JP); SHIGEHARA, Masakazu, Yokohama-shi, Kanagawa 244-8588 (JP); KIMURA, Motoyoshi, Komaki-shi, Aichi 485-0831 (JP); TSURUMI, Takeo, Komaki-shi, Aichi 485-0831 (JP); HOUDA, Kazushi, Komaki-shi, Aichi 485-0831 (JP)
(74) Representative: Hoffmann Eitle
(86) International application number: PCT/JP2016/072705
(87) International publication number: WO 2018/025337

(57) **Abstract**

Disclosed is an optical connector plug that is provided with: an optical connector incorporating an optical fiber exposed from a cable; and a cover member, in which the optical connector is housed, and the cable is led out from the rear end thereof. A latch structure for removably attaching the optical connector to the cover member is provided in the cover member.

## Description

### TECHNICAL FIELD

The present invention relates to an optical connector plug.

### BACKGROUND ART

In optical fiber drawing work, on-site assembled connectors are widely used due to the convenience of cable wiring and the convenience of storing an optical fiber during the work.

Patent literature 1 relates to an optical fiber connector for inserting a communication cable into a telecommunication enclosure so as to be optically connected to a port of the telecommunication enclosure. The optical fiber connector includes a main body portion that includes an internal passage extending from one end to the other end and a compression portion provided at the one end; a compression member that is attachable to the one end of the main body portion so as to cover the compression portion; an optical connection portion at least a part of which is disposed in the internal passage; and an external housing that is disposed to cover the optical connection portion and that functions as an SC connector, for example.

### PATENT LITERATURE

### Patent literature

Patent literature 1: US 2014/0355936 specification

### SUMMARY OF INVENTION

An optical connector plug according to one aspect of the present disclosure includes:
an optical connector that includes an optical fiber exposed from a cable; and
a cover member that stores the optical connector and that pulls out the cable from a rear end of the cover member,
a latch structure is provided in the cover member to detachably attach the optical connector to the cover member.

### BRIEF DESCRIPTION OF DRAWINGS

FIG. 1 is a perspective view showing an example of an optical connector plug according to the present embodiment.
FIG. 2 is a perspective view showing a state where a rear housing and a boot are detached from the optical connector plug shown in FIG. 1.
FIG. 3 is a perspective view showing a state where an optical connector is pulled out from the state shown in FIG. 2.
FIG. 4 is an exploded perspective view of the optical connector plug of FIG. 1.
FIG. 5 is a perspective view of the optical connector configuring the optical connector plug.
FIG. 6 is a perspective view of a front housing configuring the optical connector plug.
FIG. 7 is a cross-sectional view illustrating an example of a latch portion provided in the front housing.
FIG. 8 is a cross-sectional view illustrating the example of the latch portion provided in the front housing.
FIG. 9 is a cross-sectional view illustrating the example of the latch portion provided in the front housing.
FIG. 10 is a cross-sectional view illustrating another example of the latch portion.
FIG.11 is a perspective view of a cable gripping member configuring the optical connector plug.
FIG. 12 is a perspective view of the rear housing configuring the optical connector plug.
FIG. 13 is a cross-sectional view of a waterproof member configuring the optical connector plug and a cable to be inserted into the waterproof member.
FIG. 14 is a cross-sectional view illustrating the optical connector and the cable which are stored in a cover member.
FIG. 15 is a cross-sectional view illustrating the optical connector and the cable which are stored in the cover member.
FIG. 16 is a perspective view showing a cap member attached to the front housing.
FIG. 17 is a perspective view illustrating the cap member of FIG. 16.
FIG. 18 is a perspective view illustrating the cap member of FIG. 16.
FIG. 19 is a perspective view showing a modification of an optical connector plug.
FIG. 20 is a cross-sectional view illustrating the optical connector plug of FIG. 19.
FIG. 21 is a cross-sectional view illustrating the optical connector plug of FIG. 19.
FIG. 22 is a perspective view showing a modification of a front housing configuring an optical connector plug.
FIG. 23 is a perspective view showing a state where an optical connector is assembled to the front housing of FIG. 22.
FIG. 24 is a cross-sectional view illustrating the optical connector plug in the state of FIG. 23.
FIG. 25 is a perspective view illustrating a state where the optical connector is inserted into the front housing with upper and lower sides thereof reversed from that in FIG. 24.

### DESCRIPTION OF EMBODIMENTS

### [TECHNICAL PROBLEM]

When the optical fiber connector as described in Patent literature 1 is assembled on site, fitting between the main body portion and the compression member, and fitting between the optical connection portion and an outer housing are performed in a state where the optical connection portion to which the cable is connected is inserted in the internal passage of the main body portion. At this time, the main body portion may drop out from the cable, and there is a room for improvement in the aspect of workability of on-site assembly.

Accordingly, an object of the present disclosure is to provide an optical connector plug capable of improving the workability of on-site assembly.

### [ADVANTAGEOUS EFFECTS OF INVENTION]

According to the present disclosure, an optical connector plug capable of improving the workability of on-site assembly can be provided.

### [DESCRIPTION OF EMBODIMENT OF DISCLOSURE]

First, an embodiment of the present disclosure is listed and described.

An optical connector plug according to one aspect of the present disclosure is as follow.
(1) The optical connector plug includes:
   an optical connector that includes an optical fiber exposed from a cable; and
   a cover member that stores the optical connector and that pulls out the cable from a rear end of the cover member,
   a latch structure is provided in the cover member to detachably attach the optical connector to the cover member.

   According to such configuration, the workability of on-site assembly can be improved by temporarily fixing the optical connector to the cover member.
(2) In the optical connector plug, the latch structure may include at least one pawl portion that protrudes from an inner surface of the cover member.
   According to such configuration, the optical connector can be easily fixed temporarily.
(3) The optical connector plug may further include a cable gripping member through which the cable is inserted and that is disposed on a rear side of the optical connector,
   the cable gripping member is in contact with the inner surface of the cover member to fix the cable to the cover member.
   According to such configuration, a strength of gripping the cable can be increased, and the disposition of the optical connector in the cover member cannot be affected adversely even when a strong pulling force is applied to the cable.
(4) In the optical connector plug, the cover member includes a front housing that stores the optical connector, and a rear housing that is connected to a rear end of the front housing, and
   the front housing and the rear housing are connected to each other to grip the cable by the cable gripping member.
   According to such configuration, the cable can be reliably gripped with a simple structure.
(5) In the optical connector plug, the cable gripping member includes a pair of arm portions,
   an inner surface of the rear housing has a shape narrowing toward a rear end, and
   the arm portions are constricted by the inner surface of the rear housing in a state where the rear housing is fitted to the front housing.
   According to such configuration, the cable can be reliably fixed by a simple method of fitting the rear housing to the front housing.
(6) In the optical connector plug, a connector receiving portion having a shape corresponding to a shape of a front end portion of the optical connector may be formed in the cover member.
   According to such configuration, the optical connector can be stored in the cover member in an appropriate direction.
(7) The optical connector plug may further include a cap member that is attachable to the cover member and that protects a front end portion of the optical connector and,
   a connector receiving portion having a shape corresponding to a shape of the front end portion of the optical connector may be formed in the cap member.
   According to such configuration, the optical connector can be stored in the cover member in an appropriate direction by engaging the optical connector in only one predetermined direction with the cap member.
(8) The optical connector plug may further includes a waterproof member that is disposed between the cover member and the cable,
   the waterproof member may be compressed when the optical connector is assembled to the cover member.
   According to such configuration, waterproof performance and dustproof performance of the cover member can be ensured by compressing the waterproof member disposed between the cover member and the cable.
(9) In the optical connector plug, the cover member includes a front housing that stores the optical connector, a rear housing that is connected to a rear end of the front housing, and a boot that is connected to a rear end of the rear housing,
   a plurality of arm members protruding toward a boot side are formed at the rear end of the rear housing, and
   in a state where the waterproof member is disposed between the plurality of arm members and the cable, the rear housing and the boot are fitted to each other to compress the waterproof member by the plurality of arm members.
   According to such configuration, the waterproof performance can be ensured by a simple method of fitting the boot to the rear end of the rear housing.
(10) In the optical connector plug, the waterproof member is formed of a resin member that includes a penetrating portion through which the cable is inserted, and
   the penetrating portion includes a protruding portion corresponding to a notch of the cable.
   According to such configuration, the waterproof performance and the dustproof performance can be reliably ensured.
(11) In the optical connector plug, an attaching member which attaches the optical connector to the cover member may be disposed at a rear end of the optical connector.

According to such configuration, by using attaching members having different structures according to the optical connectors with various shapes which are generally used, the cover member or the like can be commonly used, work efficiency can be improved and the production cost of the optical connector plug can be reduced.

### [Details of Embodiments of Disclosure]

Specific examples of an optical connector plug according to an embodiment of the present disclosure will be described with reference to drawings hereinafter.

Incidentally, the present disclosure is not limited to these examples but indicated by the scope of claims, and is intended to include meanings equivalent to the scope of claims and all modifications within the scope.

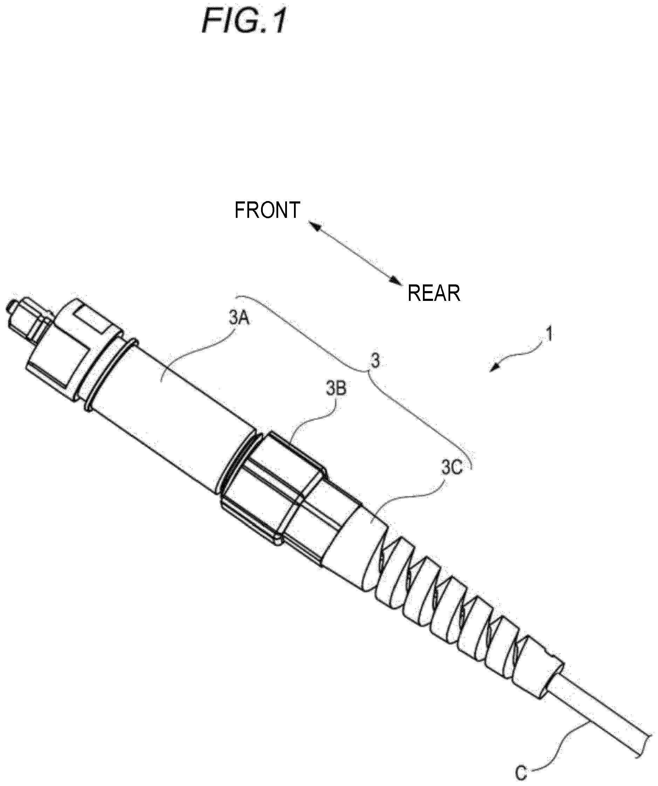

As shown in FIGS. 1 to 4, an optical connector plug 1 includes an optical connector 2 and a cover member 3 (3A, 3B, 3C) that stores the optical connector 2. The cover member 3 includes a front housing 3A, a rear housing 3B and a boot 3C.

The optical connector 2 is stored in the front housing 3A of the cover member 3. The optical connector 2 is configured to be inserted into the front housing 3A from a rear side of the front housing 3A.

The rear housing 3B is detachably connected to a rear end of the front housing 3A by screw fitting, for example. The boot 3C is detachably connected to a rear end of the rear housing 3B by screw fitting, for example. The cable C connected to the optical connector 2 is inserted through the inside of the rear housing 3B and the inside of the boot 3C and pulled out from a rear end of the boot 3C to the outside. The cable C is covered by the boot 3C, so as to protect the cable C from a sudden bending.

Further, the optical connector plug 1 includes a cable gripping member 4 and a waterproof member 5.

The cable gripping member 4 is disposed at a rear side of the optical connector 2 in a longitudinal direction (front-rear direction) of the optical connector plug 1. The cable gripping member 4 is formed in a tubular shape, and the cable C connected to the optical connector 2 is inserted through the cable gripping member 4. The cable gripping member 4 is stored in the front housing 3A and the rear housing 3B.

The waterproof member 5 is disposed between the rear housing 3B and the boot 3C in the longitudinal direction of the optical connector plug 1. The cable C connected to the optical connector 2 is inserted through the waterproof member 5. The waterproof member 5 is stored in the rear housing 3B and the boot 3C.

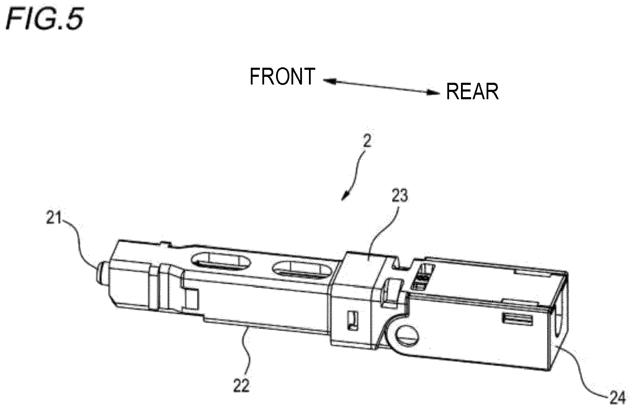

As shown in FIG. 5, the optical connector 2 includes a ferrule 21 to which a tip end portion of an optical fiber is attached, and a connector housing 22 that holds the ferrule 21. The optical connector 2 is, for example, a SC connector to which the cable C is assembled. The cable C includes an optical fiber core wire, a tensile strength fiber that covers the optical fiber core wire, and a sheath that covers the tensile strength fiber. The optical fiber including a core and a clad and having a diameter of 125 µm, for example, is covered with an ultraviolet-curable resin such that the optical fiber core wire has an outer diameter of 250 µm, for example; and according to the use, the optical fiber core wire is further covered with a nylon resin or the like such that a diameter of the optical fiber core wire is 900 µm. The cable C may be a single-core type or a multi-core type, and may be a flat cable or a round cable. The optical connector 2 can be attached to an adapter built in a receptacle (not shown).

The ferrule 21 is held by the connector housing 22 such that a front end portion of the ferrule 21 protrudes from a front end surface of the connector housing 22. In the ferrule 21, an insertion hole is provided along a longitudinal direction of the ferrule 21 at a center portion in a peripheral direction of the ferrule 21. The optical fiber which is pulled out from the cable C and exposed is inserted into the insertion hole.

The connector housing 22 is a hollow member and holds the ferrule 21 in the connector housing 22. A flange 23 is provided on an outer periphery of the connector housing 22 at a center portion in the longitudinal direction (front-rear direction). In the connector housing 22, a side opposite to the side where the ferrule 21 protrudes is a rear end portion 24.

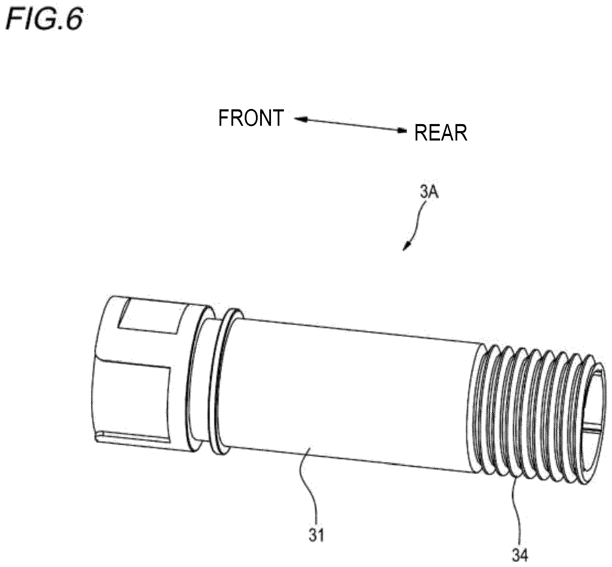

As shown in FIG. 6, the front housing 3A includes a storing portion 31 and a fitting portion 34 to which the rear housing 3B is fitted. The front housing 3A is formed of a resin member, for example.

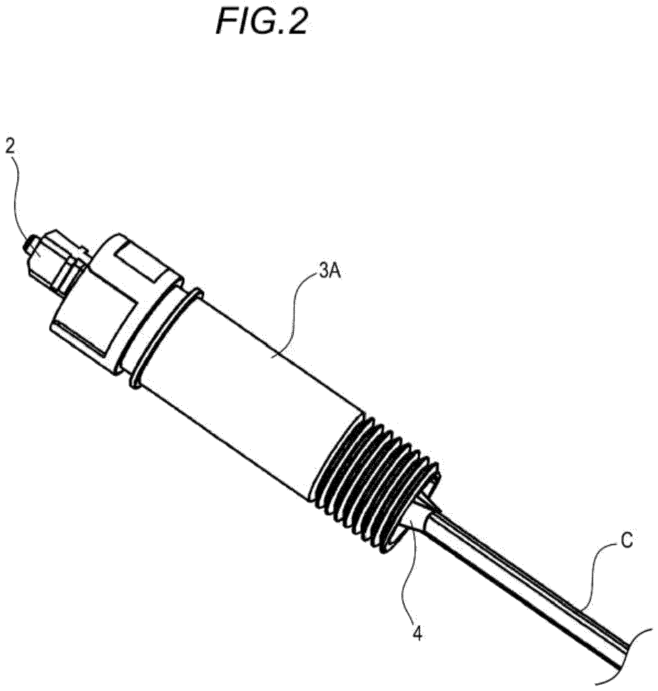

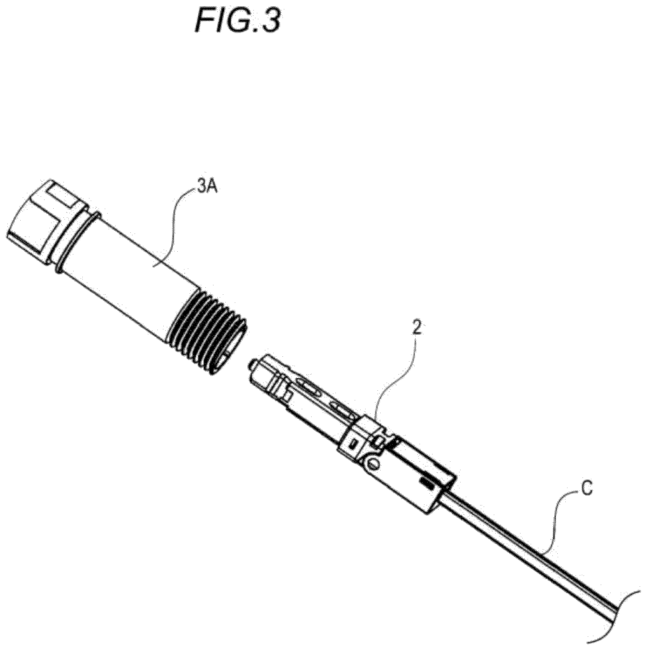

The storing portion 31 is formed in a substantially cylindrical shape, and the optical connector 2 is stored in the storing portion 31 such that a front end portion of the optical connector 2 protrudes forward (see FIGS. 2 and 3) from the storing portion 31 in the interior thereof.

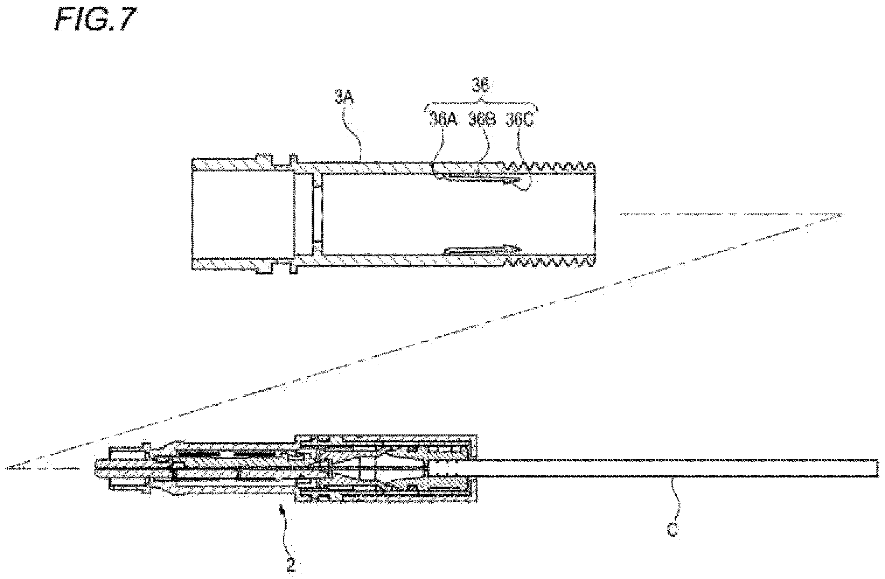

As shown in FIGS. 7 to 9, in the front housing 3A, a latch portion 36 (an example of a latch structure), which allows the optical connector 2 to be attached to and detached from the front housing 3A, is integrally formed with the front housing 3A. The latch portion 36 includes a base portion 36A, an arm portion 36B, and a pawl portion 36C. The base portion 36A is provided to protrud from an inner surface of the front housing 3A. The arm portion 36B extends substantially in parallel with the inner surface of the front housing 3A from a tip end of the base portion 36A toward a rear side of the front housing 3A. That is, the arm portion 36B is provided apart from the inner surface of the front housing 3A by the height of the base portion 36A. The pawl portion 36C is provided at a tip end portion of the arm portion 36B and facing inward of the front housing 3A. At least one latch portion 36 is provided along the inner peripheral surface.

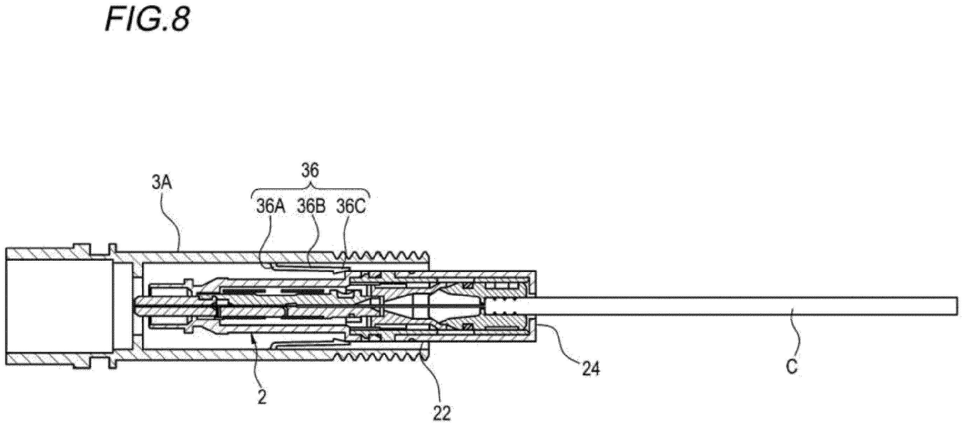

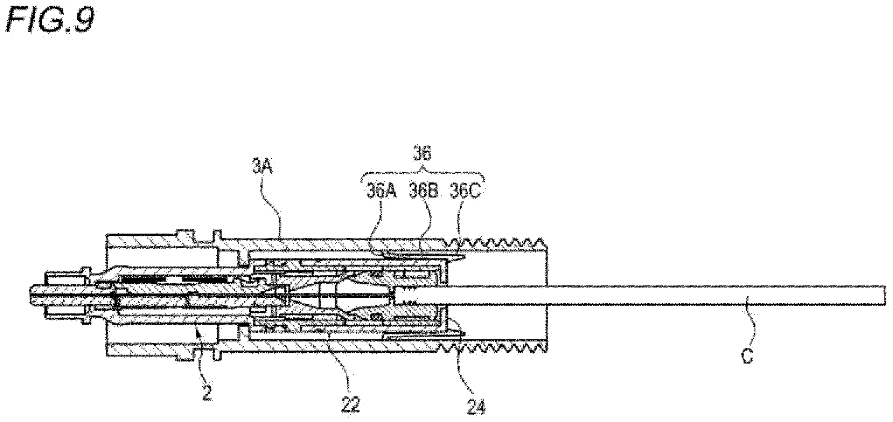

When the optical connector 2 is inserted into the front housing 3A, as shown in FIG. 8, the pawl portion 36C is pressed by a side surface of the connector housing 22 of the optical connector 2, and the arm portion 36B having elasticity deflects toward a direction of the inner surface of the front housing 3A. When the optical connector 2 is further inserted, as shown in FIG. 9, the pawl portion 36C is engaged with the rear end portion 24 of the connector housing 22, and the optical connector 2 is temporarily fixed by the pawl portion 36C. In addition, when the cable C is pulled rearward from a state where the optical connector 2 is temporarily fixed, the arm portion 36B deflects in the same manner as described above, the pawl portion 36C is disengaged from the rear end portion 24 of the connector housing 22, and the optical connector 2 is detached from the front housing 3A.

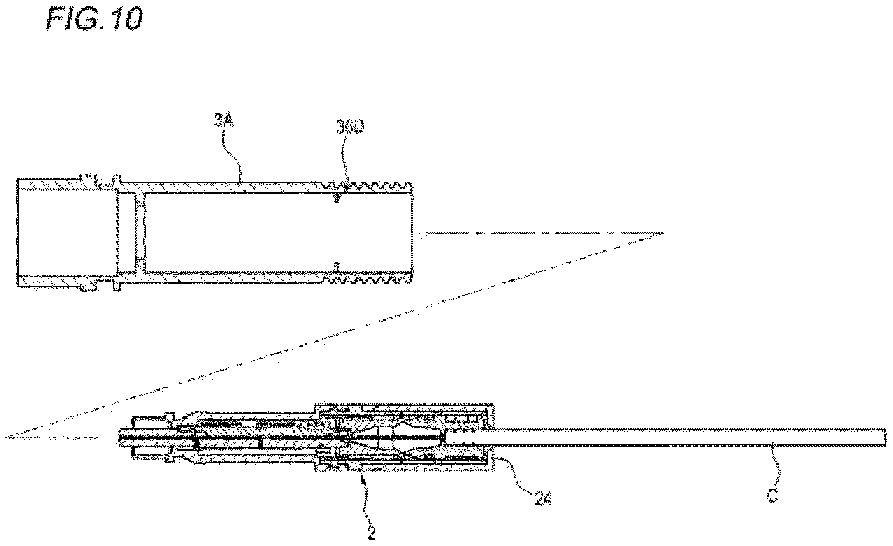

As shown in FIG. 10, the latch portion 36 may be configured such that a thin plate-shaped pawl portion 36D, for example, protrudes inward from the inner surface of the front housing 3A. In such configuration, when the optical connector 2 is inserted into the front housing 3A, the pawl portion 36D deflects toward a front side of the front housing 3A and then returns to an original state, so as to engage with the rear end portion 24 of the connector housing 22. Therefore, the optical connector 2 is temporarily fixed. When the cable C is pulled rearward, the pawl portion 36D deflects toward the rear side of the front housing 3A and disengages from the rear end portion 24, and the optical connector 2 is detached from the front housing 3A. At least one pawl portion 36D is provided along the inner peripheral surface, or may be provided over the entire periphery, for example.

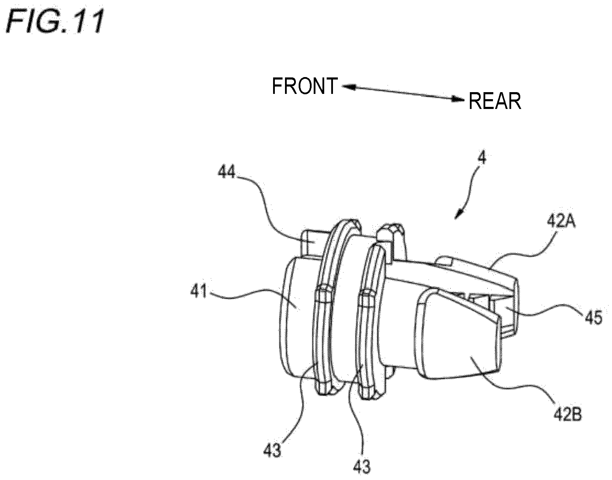

As shown in FIG. 11, the cable gripping member 4 is formed of a resin member, for example, and includes a cylindrical body portion 41 and a pair of arm portions 42A and 42B extending rearward from a rear end of the body portion 41.

A flange 43 is provided on an outer periphery of the body portion 41, and at least one cutout 44 is provided at a front end portion of the body portion 41. The arm portions 42A and 42B are disposed so as to face each other with a gap through which the cable C can be inserted, and a plurality of gripping teeth 45 are formed on both surfaces that face each other. The cable gripping member 4 grips the inserted cable C by the arm portions 42A and 42B by narrowing the gap between the arm portions 42A and 42B.

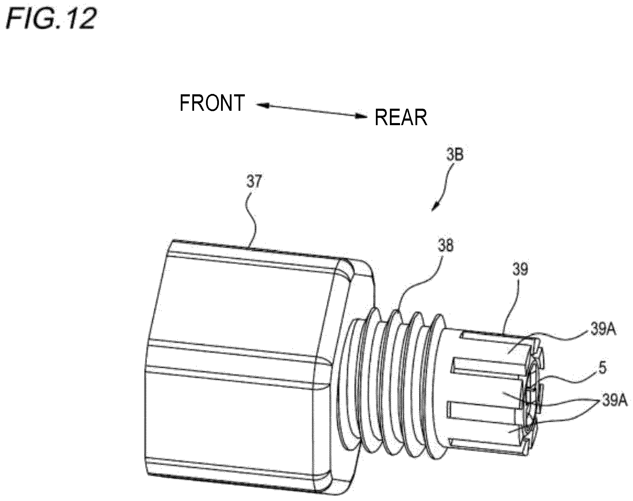

As shown in FIG. 12, the rear housing 3B includes a first fitting portion 37 to be fitted to the front housing 3A, a second fitting portion 38 to be fitted to the boot 3C, and a compression portion 39 in which the waterproof member 5 is stored.

The compression portion 39 is provided at the rear end of the rear housing 3B and includes a plurality of arm members 39A protruding toward a boot 3C side (rearward). The plurality of arm members 39A are disposed such that small gaps are left between adjacent arm members 39A, and a space capable of storing the waterproof member 5 is formed. For example, in a case where an outer shape of the waterproofing member 5 is rectangular, the plurality of arm members 39A are disposed to form a rectangular space; and in a case where the outer shape of the waterproofing member 5 is circular, the plurality of arm members 39A are disposed to form a circular space.

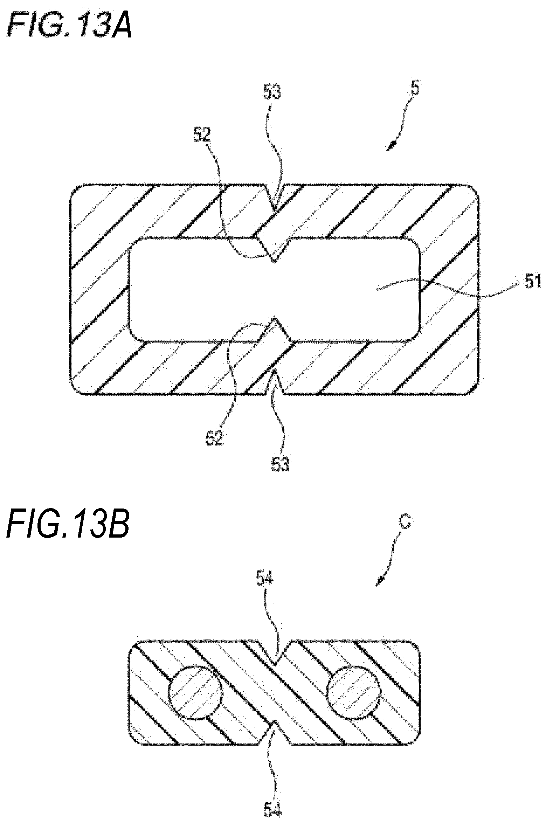

The waterproof member 5 is formed of a resin member, for example. As shown in FIG. 13A, the waterproof member 5 is formed in a rectangular shape, for example, and includes a penetrating portion 51 through which the cable C is inserted.

The penetrating portion 51 is provided with protruding portions 52. The protruding portions 52 are provided so as to correspond to the position and shape of notches 54 formed on the cable C to be inserted (see FIG. 13B). On an outer surface of the waterproof member 5, cutout portions 53 are formed at positions corresponding to the projection portions 52. In the waterproof member 5 of the present embodiment, the penetrating portion 51 is formed in a rectangular shape so as to correspond to the flat cable C, and two V-shaped projection portions 52 are formed on side surfaces of the penetrating portion 51.

The shape of the cable C to be used is not limited to a flat cable, but may also be a round cable, for example. Although the outer shape of the waterproofing member 5 of the present embodiment is formed in a rectangular shape, it is not limited thereto and may be formed in a circular shape, for example. Further, the cutout portion 53 may not be formed.

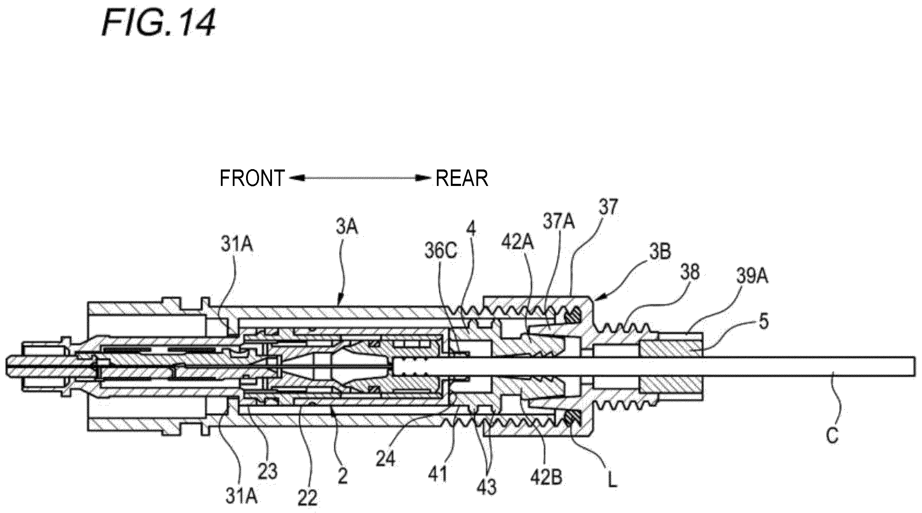

As shown in the cross-sectional view of FIG. 14, protruding portions 31A protruding from the inner surface are formed in the front housing 3A. In the optical connector 2 stored in the front housing 3A, a position in a front direction is fixed in the front housing 3A by the flange 23 of the connector housing 22 being in contact with the protruding portion 31A. Further, a position in a rear direction of the optical connector 2 is temporarily fixed by engaging the pawl portion 36C of the latch portion 36 with the rear end portion 24 of the optical connector 2. The pawl portion 36C is engaged with the rear end portion 24 of the optical connector 2 in a state where the pawl portion 36C comes into the cutout 44 provided in the body portion 41 of the cable gripping member 4.

In the cable gripping member 4 stored in the front housing 3A, a position in a front direction is fixed in the front housing 3A by a front end surface of the body portion 41 being in contact with the rear end portion 24 of the optical connector 2. Further, a position in a radial direction of the cable gripping member 4 is fixed in the front housing 3A by the flange 43 of the body portion 41 being in contact with the inner surface of the front housing 3A. In addition, the position in the rear direction of the connector 2 is also fixed by the front end surface of the body portion 41 of the cable gripping member 4 being in contact with the rear end portion 24 of the optical connector 2.

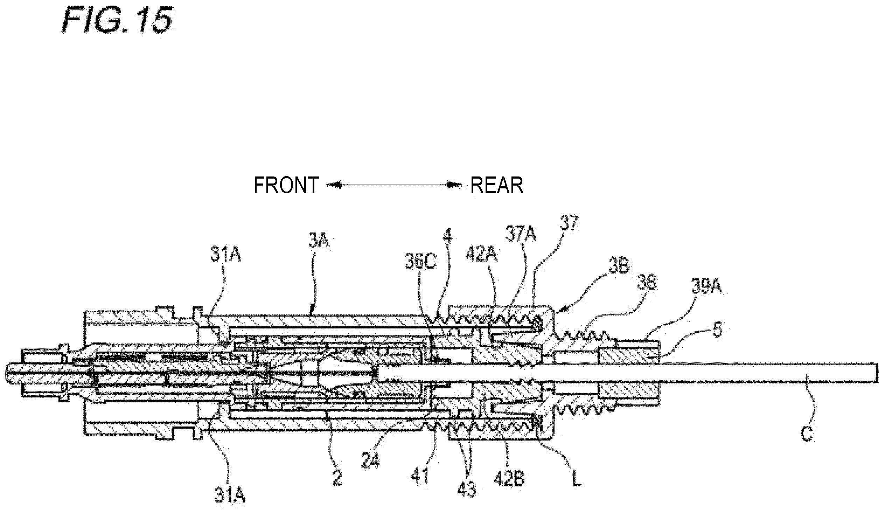

In the first fitting portion 37 of the rear housing 3B, a cylindrical gripping portion 37A is provided to face forward in the same manner as the first fitting portion 37. An inner surface of the gripping portion 37A has a shape narrowing toward a rear end. That is, an inner diameter of the gripping portion 37A is formed to decrease toward the rear end. The gripping portion 37A and the cable gripping member 4 are configured such that when the rear housing 3B is fitted to the front housing 3A, the arm portions 42A and 42B of the cable gripping member 4 comes into an inner side of the inner peripheral surface of the gripping portion 37 while being in contact therewith. At this time, since the inner surface of the gripping portion 37A has the shape of narrowing toward the rear end, as shown in FIG. 15, the arm portions 42A and 42B are greatly constricted by the inner surface of the grip portion 37A as the arm portions 42A and 42B are deeply fitted. As a result, the cable C inserted through the cable gripping member 4 is gripped by the gripping teeth 45 of the arm portions 42A and 42B and fixed to the cover member 3. In addition, an O-ring L is stored in a groove formed by the inner surface of the first fitting portion 37 and the gripping portion 37A. When the rear housing 3B is fitted to the front housing 3A, the fitting portion 34 of the front housing 3A and the O-ring L are in contact with each other, so that waterproof performance at a fitted part of the front housing 3A and the rear housing 3B is secured.

As shown in FIGS. 14 and 15, the waterproof member 5, through which the cable C is inserted, is stored in the compression portion 39 of the rear housing 3B. That is, the waterproof member 5 is disposed between the compression portion 39 and the cable C in a radial direction of the cover member 3. The boot 3C is fitted to the rear housing 3B so that the compression portion 39 is compressed by the boot 3C. Accordingly, the waterproof member 5 stored in the compression portion 39 is compressed by the plurality of arm members 39A configuring the compression portion 39.

There are various types of optical connectors 2 which are generally used, and shapes (lengths) thereof also differ depending on the type of the optical connector 2.

Therefore, in consideration of the workability of on-site assembly and the production cost, it is desirable that the optical connector plug 1 can be commonly used for the optical connectors 2 having different lengths.

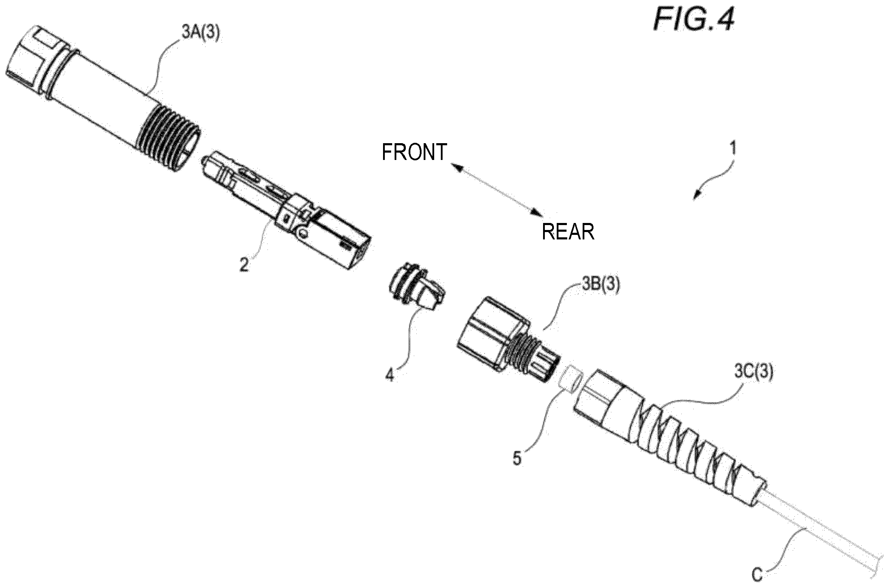

For this reason, when the length in the front-rear direction of the optical connector 2 is shorter than a predetermined length, a spacer (an example of attaching member) for unifying the length may be provided. For example, in FIG. 4, the spacer is disposed at a rear end of the optical connector 2. When the spacer is disposed, the position in the rear direction of the optical connector 2 is indirectly fixed in the storing front housing 3A by engaging the pawl portion 36C with a rear end portion of the spacer.

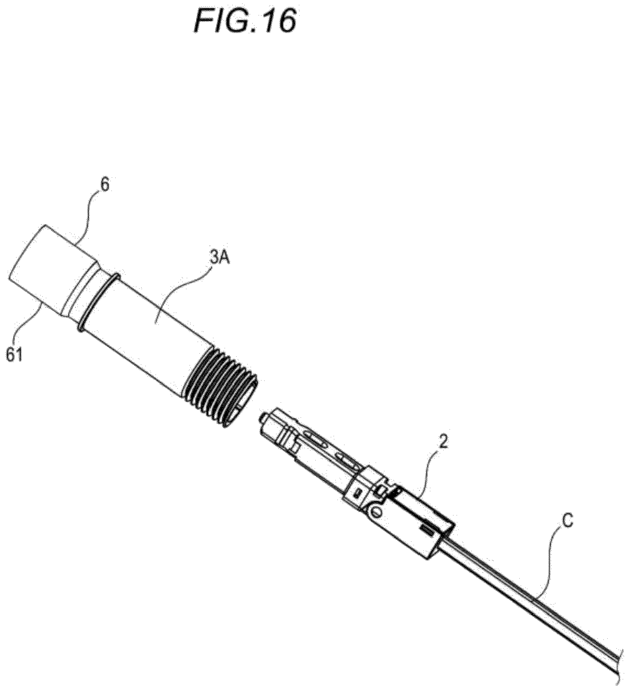

As shown in FIG. 16, the optical connector plug may also include a cap member 6.

The cap member 6 is detachably provided at a front end portion of the front housing 3A. The cap member 6 has a function of guiding an insertion direction of the optical connector 2 to be inserted into the front housing 3A, and a function of protecting the front end portion of the optical connector 2 protruding from the front housing 3A.

The cap member 6 includes a first cap portion 61 and a second cap portion 62 provided to protrude forward from a front end of the first cap portion 61. The first cap portion 61 is attached to the front end portion of the front housing 3A. The second cap portion 62 is attached to the front end portion of the optical connector 2 protruding forward from the storing portion 31 of the front housing 3A.

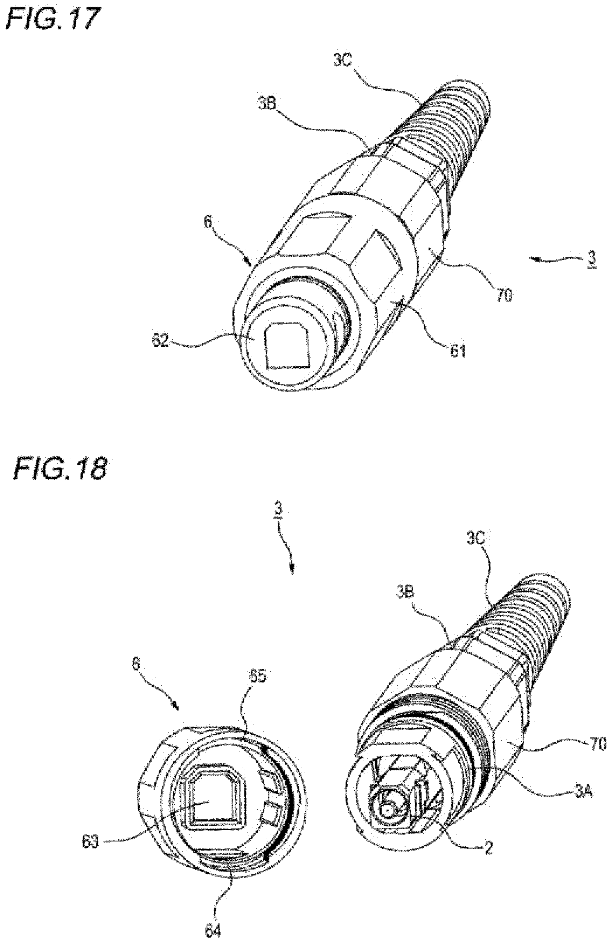

As shown in FIGS. 17 and 18, a connector receiving portion 63 having a shape corresponding to the shape of the front end portion of the optical connector 2 is formed in the second cap portion 62. Further, as shown in FIG. 18, cutouts 64 and 65 having shapes corresponding to the shape of the storing portion 31 of the front housing 3A are formed in the first cap portion 61. The cutouts 64 and 65 are provided so that an attaching direction of the cap member 6 to be attached to the front housing 3A is regulated. The connector receiving portion 63 is provided so that an attaching direction of the optical connector 2 to be attached to the cap member 6 is regulated. Accordingly, the insertion direction of the optical connector 2 to be inserted into the front housing 3A is regulated. In FIGS. 17 and 18, a coupling member 70 through which the front housing 3A is inserted is shown. The coupling member 70 can be rotated and slided around the front housing 3A, and can be coupled with a receptacle (not shown) for an optical connector which is a connection party of the optical connector plug.

According to the configuration of such optical connector plug 1, before the rear housing 3B is fitted to the front housing 3A, the optical connector 2 inserted into the front housing 3A can be temporarily fixed to the front housing 3A by the latch portion 36. Therefore, during the assembling work, the optical connector 2 can be prevented from dropping out from the front housing 3A easily, so that the workability of on-site assembly can be improved.

The rear housing 3B is fitted to the front housing 3A, so that the cable C connected to the optical connector 2 can be gripped by the cable gripping member 4 and fixed to the cover member 3. Therefore, the cable C can be prevented from dropping out from the optical connector 2 even when a strong pulling force is applied to the cable C. Further, the influence of the pulling force on the optical connector 2 can be suppressed, so that displacement of the optical connector 2 in the cover member 3 can be prevented. Thus, the assembling workability can be improved, and the fitting accuracy between the optical connector plug 1 and the receptacle can be improved.

Since a front end surface of the cable gripping member 4 is in contact with the rear end portion 24 of the optical connector 2, the rear housing 3B is fitted to the front housing 3A, and thus, the position in the rear direction of the connector 2 can be fixed by the cable gripping member 4. Therefore, as described above, displacement of the optical connector 2 in the cover member 3 can be prevented, and the fitting accuracy between the optical connector plug 1 and the receptacle can be improved.

Since the inner surface of the gripping portion 37A of the rear housing 3B has the shape of narrowing toward the rear end, by a simple method of fitting the rear housing 3B to the front housing 3A, the arm portions 42A and 42B of the cable gripping member 4 can be narrowed and the cable C can be reliably fixed.

Further, by a simple method of fitting the boot 3C to the rear end of the rear housing 3B, the waterproof member 5 disposed between the rear housing 3B and the cable C can be compressed, and waterproof performance and dustproof performance of the cover member 3 can be ensured. The protruding portion 52 corresponding to the notch of the cable C is formed in the penetrating portion 51 through which the cable C is inserted, so that a gap between the cable C and the waterproof member 5 can be further reduced, and the waterproof performance and the dustproof performance can be reliably ensured.

The connector receiving portion 63 having a shape corresponding to the front end portion of the optical connector 2 is formed in the second cap portion 62 of the cap member 6. Therefore, the optical connector 2 can be engaged in only one predetermined direction with the cap member 6 attached to the front housing 3A. Further, the cutouts 64 and 65 having shapes corresponding to the storing portion 31 of the front housing 3A are formed in the first cap portion 61, so that the cap member 6 can be engaged in only one predetermined direction with the front housing 3A. Therefore, at the time of assembling, the optical connector 2 can be reliably stored in the cover member 3 in an appropriate direction.

Since the length of the optical connector 2 can be unified by disposing the spacer between the optical connector 2 and the cable gripping member 4, the cable gripping member 4 can be disposed at a predetermined position without leaving a gap between the optical connector 2 and the cable gripping member 4. Accordingly, the cable C can be reliably fixed by the cable gripping member 4. Further, by using spacers having different structures according to the optical connectors 2 of various shapes which are generally used, the cover member 3 or the like can be commonly used, work efficiency can be improved and the production cost of the optical connector plug 1 can be reduced.

### (First Modification)

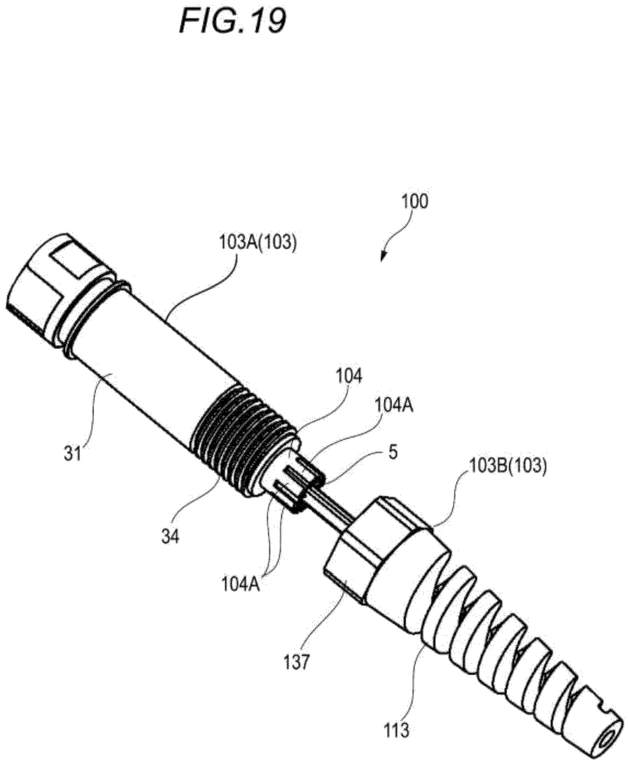

As shown in FIG. 19, in an optical connector plug 100 of a first modification, a cover member 103 includes a front housing 103A and a rear housing 103B. Portions assigned the same reference numerals as those of the optical connector plug 1 of the embodiment described above are portions having the same function, and the description thereof will be omitted.

The front housing 103A also functions as a cable gripping member, and a cable gripping portion 104 is integrally provided at a rear end of the fitting portion 34. The cable gripping portion 104 includes a plurality of arm members 104A protruding toward a rear housing 103B side (rear side). The plurality of arm members 104A are disposed such that small gaps are left between adjacent arm members 104A, and a space capable of storing the waterproof member 5 is formed.

The rear housing 103B is detachably connected to a rear end of the front housing 103A by screw fitting, for example. The rear housing 103B also functions as a boot, and a boot portion 113 is integrally provided at a rear end of a fitting portion 137. An O ring L is provided in an inner surface of the rear housing 103B at a rear side of the fitting portion 137.

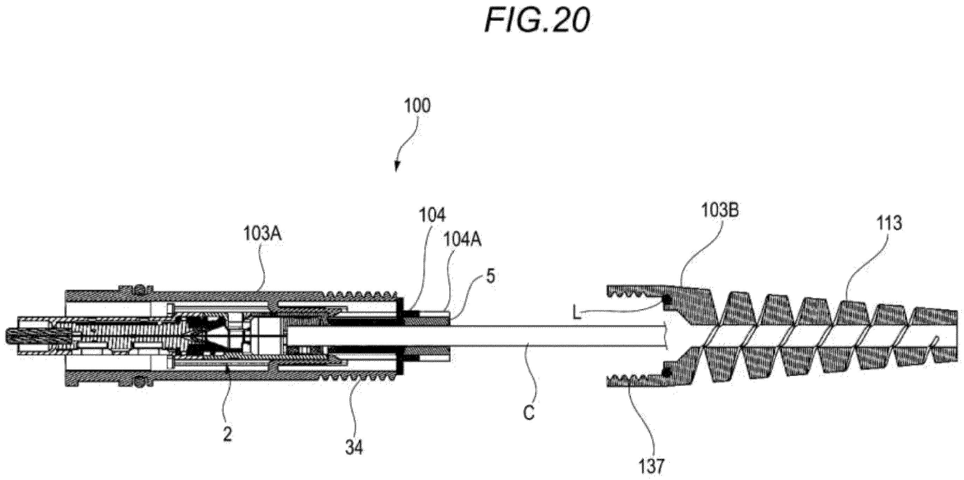

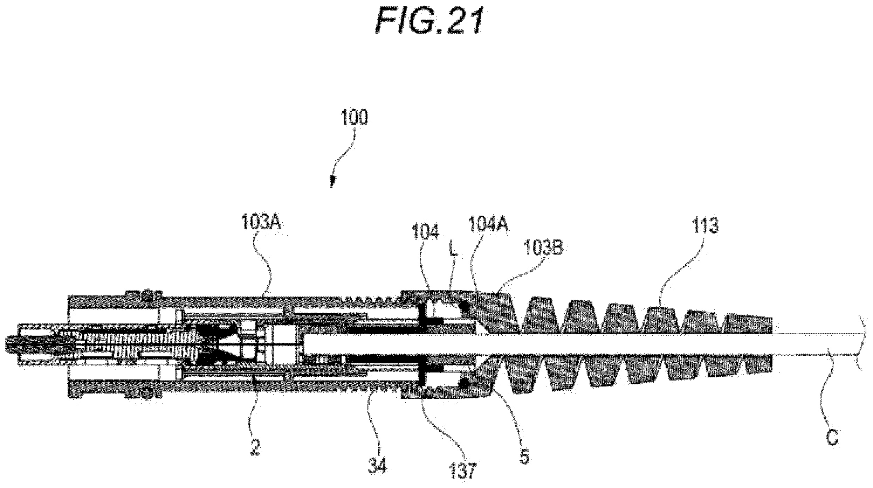

As shown in FIGS. 20 and 21, the fitting portion 137 of the rear housing 103B is fitted to the fitting portion 34 of the front housing 103A, so that the arm members 104A of the cable gripping portion 104 are compressed by the inner surface of the rear housing 103B. Accordingly, the waterproof member 5 stored in the cable gripping portion 104 is gripped by the plurality of arm members 104A, and the cable C inserted through the waterproof member 5 is compressed by the waterproof member 5, so that the cable C is fixed to the front housing 103A.

According to such configuration, the workability of on-site assembly can be improved as in the above embodiment.

Further, waterproof performance between the front housing 103A and the rear housing 103B can be ensured by the O-ring L provided on the inner surface of the rear housing 103B, and waterproof performance against water or the like entering from the rear end side of the boot portion 113 can be ensured by the waterproof member 5 compressed by the arm members 104A.

### [Second Modification]

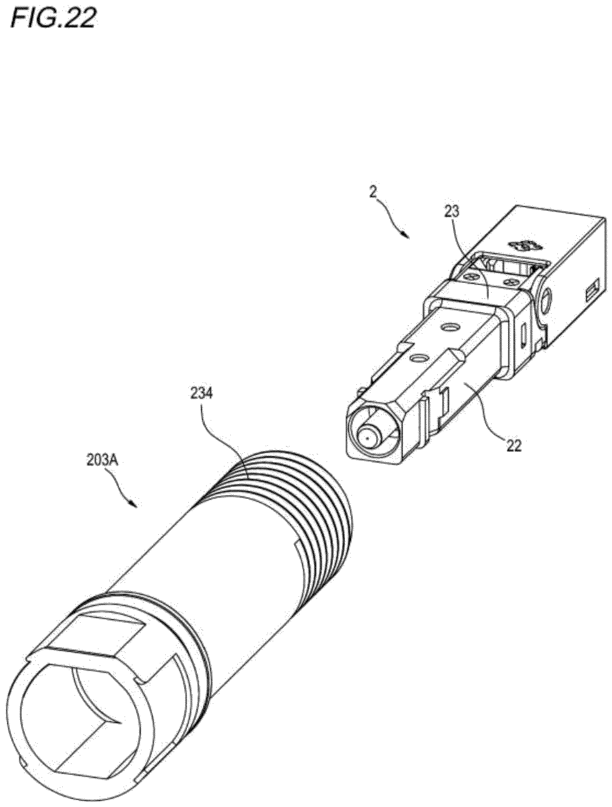

FIG. 22 shows an optical connector plug according to a second modification which is configured by a front housing 203A and the optical connector 2. The front housing 203A includes a storing portion 231 and a fitting portion 234 to which the rear housing (see FIG. 12) is fitted. The optical connector 2 has the same function as the embodiment described above, and the description thereof is omitted.

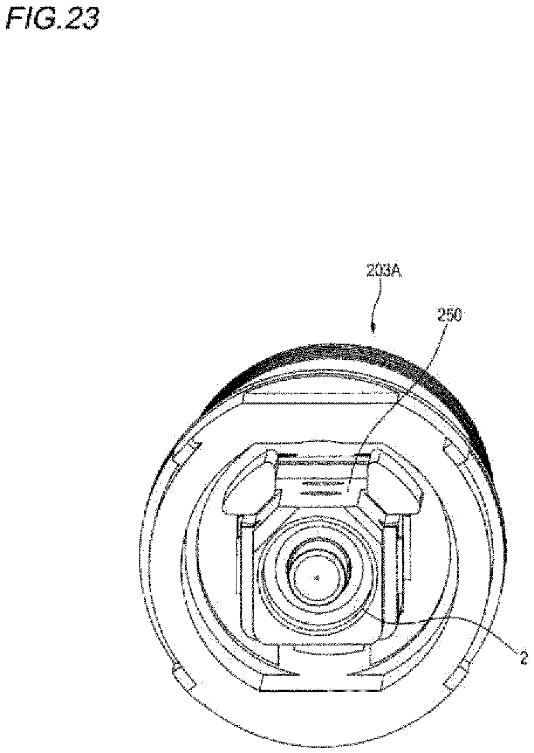

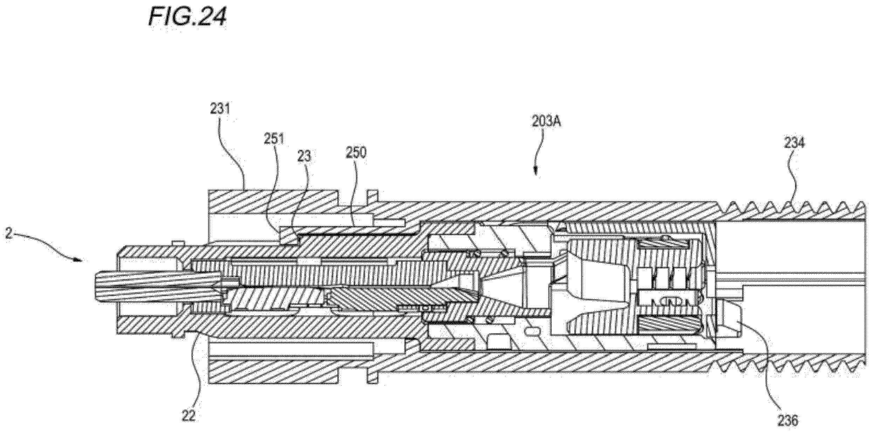

As shown in FIGS. 23 and 24, the front housing 203A includes a stopper 250 protruding inward from an inner surface of the front housing 203A on a front side from a latch portion 236. In the longitudinal cross-sectional view of the front housing 203A shown in FIG. 24, the stopper 250 includes a pawl portion 251 bent in an L shape. In a case where the optical connector 2 is inserted into the front housing 203A in a regular insertion direction, a front end of the flange 23 of the optical connector 2 is into contact with the pawl portion 251 of the stopper 250. In the front housing 203A, the latch portion 236, which allows the optical connector 2 to be attached to and detached from the front housing 203A, is integrally formed with the front housing 3A as in the above embodiment. Therefore, by engaging the latch portion 236 and the pawl portion 251 of the stopper 250, the optical connector 2 is properly fixed in a state where the front end portion of the optical connector 2 protrudes from the storing portion 231 of the front housing 203A.

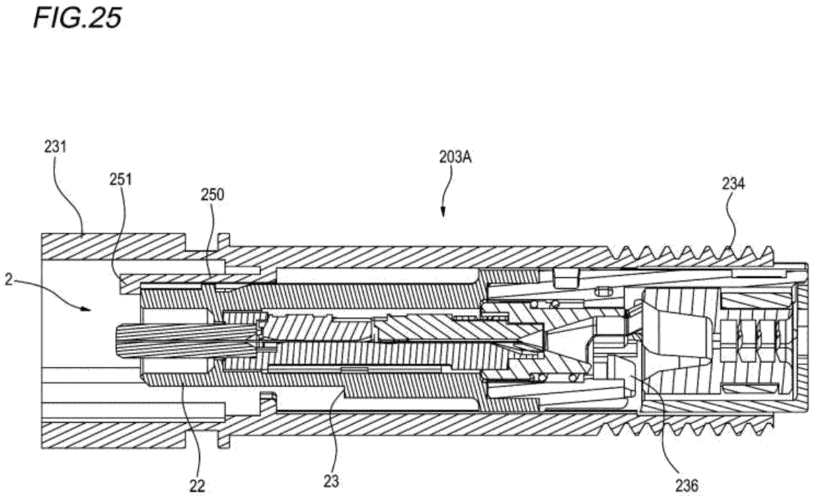

On the other hand, as shown in FIG. 25, in a case where the optical connector 2 is inserted into the front housing 203A in a wrong insertion direction (for example, a direction opposite to the regular direction with upside down), a front end of the connector housing 22 of the optical connector 2 is into contact with the pawl portion 251. Therefore, the optical connector 2 cannot be inserted forward any more, and the front end portion of the optical connector 2 cannot protrude from the storing portion 231 of the front housing 203A.

Accordingly, since the stopper 250 is provided on the inner surface of the front housing 203A, an assembling direction of the optical connector 2 with respect to the front housing 203A can be regulated. Therefore, by adopting the second modification, the optical connector 2 can be reliably stored in the front housing 203A in an appropriate direction without using the structure of the cap 6 in the above embodiment.

Although the present disclosure is described in detail with reference to a particular embodiment, it is apparent to those skilled in the art that various changes and modifications can be made without departing from the spirit and scope of the present disclosure. The numbers, positions, shapes or the like of components described above are not limited to the above embodiment, and can be changed to suitable numbers, positions, shapes or the like during carrying out the present disclosure.

### REFERENCE SIGN LIST

1 optical connector plug
2 optical connector
3 cover member
3A front housing
3B rear housing
3C boot
4 cable gripping member
5 waterproof member
36 latch portion 36 (example of latch structure)
36C, 36D pawl portion
37A gripping portion
39 compression portion
39A arm member
42A, 42B arm portion
43 flange
51 penetrating portion
52 protruding portion
54 notch
63 connector receiving portion
C cable

## Claims

1. An optical connector plug comprising:
an optical connector that includes an optical fiber exposed from a cable; and
a cover member that stores the optical connector and that pulls out the cable from a rear end of the cover member,
wherein a latch structure is provided in the cover member to detachably attach the optical connector to the cover member.

2. The optical connector plug according to claim 1,
wherein the latch structure includes at least one pawl portion that protrudes from an inner surface of the cover member.

3. The optical connector plug according to claim 1 or 2, further comprising:
a cable gripping member through which the cable is inserted and that is disposed on a rear side of the optical connector,
wherein the cable gripping member is in contact with an inner surface of the cover member to fix the cable to the cover member.

4. The optical connector plug according to claim 3,
wherein the cover member includes a front housing that stores the optical connector, and a rear housing that is connected to a rear end of the front housing, and
wherein the front housing and the rear housing are connected to each other to grip the cable by the cable gripping member.

5. The optical connector plug according to claim 4,
wherein the cable gripping member includes a pair of arm portions,
wherein an inner surface of the rear housing has a shape narrowing toward a rear end, and
wherein the arm portions are constricted by the inner surface of the rear housing in a state where the rear housing is fitted to the front housing.

6. The optical connector plug according to any one of claims 1 to 5,
wherein a connector receiving portion having a shape corresponding to a shape of a front end portion of the optical connector is formed in the cover member.

7. The optical connector plug according to any one of claims 1 to 5, further comprising:
a cap member that is attachable to the cover member and that protects a front end portion of the optical connector,
wherein a connector receiving portion having a shape corresponding to a shape of the front end portion of the optical connector is formed in the cap member.

8. The optical connector plug according to any one of claims 1 to 7, further comprising:
a waterproof member that is disposed between the cover member and the cable,
wherein the waterproof member is compressed when the optical connector is assembled to the cover member.

9. The optical connector plug according to claim 8,
wherein the cover member includes a front housing that stores the optical connector, a rear housing that is connected to a rear end of the front housing, and a boot that is connected to a rear end of the rear housing,
wherein a plurality of arm members protruding toward a boot side are formed at the rear end of the rear housing, and
wherein in a state where the waterproof member is disposed between the plurality of arm members and the cable, the rear housing and the boot are fitted to each other to compress the waterproof member by the plurality of arm members.

10. The optical connector plug according to claim 8 or 9,
wherein the waterproof member is formed of a resin member that includes a penetrating portion through which the cable is inserted, and
wherein the penetrating portion includes a protruding portion corresponding to a notch of the cable.

11. The optical connector plug according to any one of claims 1 to 10,
wherein an attaching member which attaches the optical connector to the cover member is disposed at a rear end of the optical connector.
